# EUROPÄISCHE PATENTSCHRIFT

(11) **EP 0 999 971 B1**
(45) Veröffentlichungstag und Bekanntmachung des Hinweises auf die Patenterteilung: **09.01.2002**
(21) Anmeldenummer: 98942595.4
(22) Anmeldetag: 22.07.1998
(51) Int. Cl.: B62D 5/06, B62D 5/09, B60R 25/02

(54) **HYDRAULISCHE SERVOLENKUNG MIT GESCHLOSSENER MITTE**
HYDRAULIC POWER STEERING WITH A CLOSED CENTRE
DIRECTION ASSISTEE HYDRAULIQUE DOTEE D'UN CENTRE FERME

(30) Priorität: 31.07.1997 DE 19733032
(43) Veröffentlichungstag der Anmeldung: 17.05.2000
(73) Patentinhaber: Mercedes-Benz Lenkungen GmbH, 40476 Düsseldorf (DE)
(72) Erfinder: PLUSCHKE, Albrecht, D-71364 Winnenden (DE); STEHLI, Thomas, D-72631 Aichtal (DE)
(74) Vertreter: Dahmen, Toni, Dipl.-Ing.
(86) Internationale Anmeldenummer: EP9804598
(87) Internationale Veröffentlichungsnummer: WO9906262

(56) Entgegenhaltungen:
- DE-C- 19 519 875
- DE-C- 19 641 899
- US-A- 4 562 710
- US-A- 5 553 683

## Beschreibung

Die Erfindung betrifft eine hydraulische Servolenkung mit
- einer Lenkhandhabe sowie
- damit zur Lenkverstellung zwangsgekoppelten lenkbaren Fahrzeugrädern und
- einem mit den lenkbaren Fahrzeugrädern und/oder der Lenkhandhabe zwangsgekoppelten, doppeltwirkenden hydrostatischen Servomotor,
- einer hydraulischen Druckerzeugungseinrichtung,
- einem relativ drucklosen Hydraulikreservoir,
- einer Steuerventilanordnung, welche zwei parallele jeweils einer Seite bzw. Anschlußleitung des Servomotors zugeordnete 3-Wege-Druckminderventile aufweist und beide Seiten des Servomotors mit dem Hydraulikreservoir und jeweils eine Seite des Servomotors mit der Druckerzeugungseinrichtung zu verbinden gestattet,
- einem Sensor zur Erfassung von zwischen der Lenkhandhabe und den lenkbaren Fahrzeugrädern übertragenen Kräften bzw. Momenten sowie
- einer eingangsseitig mit dem Sensor verbundenen elektronischen Steuervorrichtung, welche die Steuerventilanordnung in Abhängigkeit von den zwischen Lenkhandhabe und lenkbaren Fahrzeugrädern übertragenen Kräften bzw. Momenten derart steuert, daß der Servomotor eine Servokraft zur Verminderung einer an der Lenkhandhabe fühlbaren Handkraft erzeugt.

Eine derartige Servolenkung ist aus der US-A 5 553 683 bekannt. Diese bekannte Servolenkung besitzt drei Ventile, deren Öffnungszustand von einer elektronischen Steuerung durch Impulsbreitenmodulation gesteuert wird. Hierbei wird das Öffnungs- und Schließverhalten der Ventile unmittelbar gesteuert, wobei es zumindest vorübergehend zu Fehleinstellungen der Servokraft kommen kann.

Gemäß der Zeitschrift O + P "Ölhydraulik und Pneumatik" 40 (1996) Nr. 6, Seite 409 sind hydraulische Servolenkungen mit geschlossener Mitte bekannt, wobei bei entsprechender Bemessung eines als Druckquelle angeordneten hydraulischen Druckspeichers eine hohe Spitzenleistung verfügbar ist. Des weiteren ist vorteilhaft, daß das hydraulische System der Lenkung nur dann Energie verbraucht, wenn eine Lenkverstellung der lenkbaren Fahrzeugräder durch eine Servokraft unterstützt wird. Im Falle eines ohne Handkraft stationären Lenkzustandes wird dagegen keine hydraulische Energie benötigt.

Bei einer aus der EP-A 0 427 029 bekannten Servolenkung wird die Steuerventilanordnung durch proportional arbeitende Steuerventile gebildet, welche durch Federkraft in eine die jeweilige Seite des Servomotors mit dem Hydraulikreservoir verbindende Stellung und von einem steuerbaren Elektromagnet gegen die Federkraft in eine die jeweilige Seite des Servomotors mit dem Druckspeicher verbindende Lage gedrängt wird.

Aus der US-A 4 562 710 ist es bekannt, eine hydraulische Blockierung des Servomotors einer Servolenkung als Wegfahrsperre vorzusehen.

Bei Servolenkungen der eingangs angegebenen Art kann eine feinfühlige Steuerung der Servokraft Schwierigkeiten bereiten.

Aufgabe der Erfindung ist es, bei einer Lenkung der eingangs angegebenen Art eine Verbesserung der Steuerung der Servokraft zu ermöglichen.

Diese Aufgabe wird erfindungsgemäß dadurch gelöst, daß
- die Druckerzeugungseinrichtung einen hydraulischen Druckspeicher aufweist,
- die 3-Wege-Druck-minderventile mit steuerbarem Motordruck-Sollwert vorgesehen sind, und
- die Steuerung der Steuerventilanordnung durch die Steuerung der Motordruck-Sollwerte der Druckminderventile erfolgt.

Die Erfindung beruht auf dem allgemeinen Gedanken, die Steuerventilanordnung mit der elektronischen Steuervorrichtung indirekt zu betätigen, indem lediglich der Sollwert eines am jeweiligen Motoranschluß einzustellenden Motordruckes vorgegeben wird und die Ventilanordnung im übrigen selbsttätig in Abhängigkeit von der Soll-Istwert-Abweichung des Druckes am jeweiligen Motoranschluß arbeitet. Die Steuervorrichtung wirkt also als parameterabhängig arbeitender Sollwertgeber.

Bei der Erfindung ist vorteilhaft, daß die jeweiligen Motordruck-Sollwerte auch ein Maß für den Sollwert der jeweils einzustellenden Servokraft darstellen, d.h. die Druckminderventile arbeiten selbsttägig in Abhängigkeit der Soll-Istwert-Abweichung der Servokraft.

Damit ist einerseits eine verzögerungsfreie, bedarfsgerechte Steuerung der Servokraft gewährleistet, andererseits sind auch bei schneller Änderung der Betriebsbedingungen keine "Überreaktionen" bei der Steuerung der Servokräfte zu erwarten.

Ein besonderer Vorzug der Erfindung liegt darin, daß im oder am mechanischen Durchtrieb bzw. in oder an der Zwangsverbindung zwischen Lenkhandhabe bzw. Lenkhandrad und den damit gelenkten Fahrzeugrädern keine hydraulischen Steuerorgane mit reibungsbehafteten Dichtungen angeordnet sein müssen. Dementsprechend wird bei der Erfindung ein Lenksystem mit geringer Hysterese bei Lenkmanövern mit aufeinanderfolgenden Lenkungswechseln gewährleistet.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen beschrieben werden.

Dabei zeigt
- Fig. 1: eine schaltplanartige Gesamtdarstellung der erfindungsgemäßen Lenkung,
- Fig. 2: ein schematisiertes Funktionsbild für die bei der Erfindung eingesetzten Druckminderventile und
- Fig. 3: ein Diagramm, welches einerseits die Abhängigkeit der hydraulischen Servokräfte in Abhängigkeit von der aufzubringenden Handkraft und andererseits den elektrischen Steuerstrom an den Druckminderventilen in Abhängigkeit von der Handkraft darstellt.

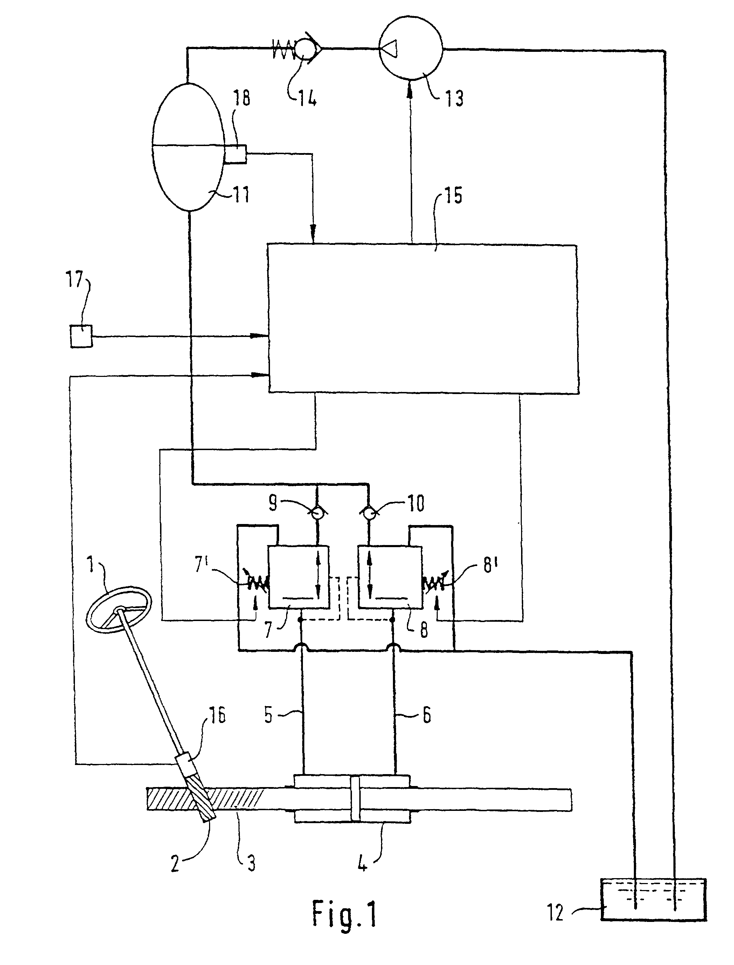

Gemäß Fig. 1 besitzt ein nicht näher dargestelltes Kraftfahrzeug ein mit nicht näher dargestellten lenkbaren Fahrzeugrädern zu deren Lenkverstellung mechanisch zwangsgekoppeltes Lenkhandrad 1, welches im dargestellten Beispiel über ein Ritzel 2 mit einer Zahnstange 3 antriebsgekoppelt ist, deren Bewegungen über nicht dargestellte Spurstangen auf die vorgenannten lenkbaren Fahrzeugräder übertragen werden.

Die Zahnstange 3 bildet einen Teil einer Kolbenstange eines doppelt wirkenden hydraulischen Kolben-Zylinder-Aggregates 4, dessen beide Seiten jeweils separat über Anschlußleitungen 5 und 6 mit jeweils einem Druckminderventil 7 bzw. 8 verbunden sind. Dabei handelt es sich jeweils um ein Druckminderventil mit Entlastung, d.h. die Druckminderventile 7 und 8 können die jeweilige Seite des Kolben-Zylinder-Aggregates 4 einerseits über zwischengeschaltete Rückschlagventile 9 und 10 mit einem hydraulischen Druckspeicher 11 oder mit einem relativ drucklosen Hydraulikreservoir 12 verbinden oder sowohl gegenüber dem Druckspeicher 11 als auch dem Hydraulikreservoir 12 absperren.

Die Druckminderventile 7 und 8 sind bezüglich ihres Druck-Sollwertes steuerbar, wie weiter unten näher erläutert wird.

Der Druckspeicher 11 kann von einer saugseitig mit dem Hydraulikreservoir 12 verbundenen Pumpe 13 geladen bzw. ständig auf einem hohen Speicherdruck von z.B. 120 bar gehalten werden, wobei durch ein Rückschlagventil 14 eine Druckentlastung des Druckspeichers 11 über die Pumpe 13 zum Reservoir 12 hin verhindert wird.

Eine rechnergestützte elektronische Steuereinheit 15 ist eingangsseitig mit einem Drehmomentsensor 16 verbunden, welcher die am Lenkhandrad 1 aufzubringende Handkraft erfaßt und im dargestellten Beispiel einer Zahnstangenlenkung zwischen dem Lenkhandrad 1 und dem Ritzel 2 angeordnet ist.

Des weiteren kann die Steuereinheit 15 eingangsseitig mit unterschiedlichen zusätzlichen Sensoren verbunden sein, beispielsweise mit einem Sensor 17 für die Fahrgeschwindigkeit des Fahrzeuges.

Außerdem ist die Eingangsseite der Steuereinheit 15 mit einem Drucksensor 18 verbunden, welcher den Speicherdruck des Druckspeichers 11 erfaßt.

Ausgangsseitig ist die Steuereinheit 15 einerseits mit Steuerorganen 7' und 8' der Druckminderventile 7 und 8 zur Steuerung des jeweiligen Druck-Sollwertes an den Anschlußleitungen 5 und 6 bzw. in den beiden Seiten des Kolben-Zylinder-Aggregates 4 verbunden.

Außerdem steuert die Ausgangseite der Steuereinheit 15 einen nicht näher dargestellten Antrieb, z.B. einen Elektromotor für die Pumpe 13.

Die in Fig. 1 dargestellte Anordnung funktioniert wie folgt:

Das als hydraulischer Servomotor wirkende Kolben-Zylinder-Aggregat 4 soll jeweils ein von der Handkraft am Lenkhandrad 1 abhängige, mit zunehmender Handkraft anwachsende bzw. mit abnehmender Handkraft abnehmende, das jeweilige Lenkmanöver unterstützende Servokraft erzeugen, deren Größe gegebenenfalls parameterabhängig, insbesondere in Abhängigkeit von der durch den Sensor 17 erfaßten Fahrgeschwindigkeit, gesteuert wird. Wenn beispielsweise das Lenkhandrad 1 vom Fahrer in eine Drehrichtung gedrängt wird, die in der Fig. 1 einer Rechtsverschiebung der Zahnstange 3 entspricht und wenn dabei die Handkraft einen übermäßigen Wert erreicht, der der Steuereinheit 15 vom Drehmomentsensor 16 "mitgeteilt" wird, so wird die Steuereinheit 15 den Drucksollwert am Druckminderventil 7 auf einen relativ hohen Wert einstellen, während der Drucksollwert am Druckminderventil 8 auf einen geringen Wert gestellt wird bzw. bei einem normalerweise eingestellten geringen Wert bleibt. Im Ergebnis wird also der Druck-Sollwert am Druckminderventil 7 den Druck-Istwert an der Anschlußleitung 6 bzw. auf der in Fig. 1 rechten Seite des Kolben-Zylinder-Aggregates 4 übersteigen, während der Druck-Sollwert am Druckminderventil 8 unter den Istwert an der Anschlußleitung 6 bzw. auf der linken Seite des Kolben-Zylinder-Aggregates 4 fällt. Damit stellt das Druckminderventil 7 eine Verbindung der linken Seite des Kolben-Zylinder-Aggregates 4 mit dem Druckspeicher 11 her, der durch Einschalten der Pumpe 13 von der Steuereinheit 15 regelmäßig nachgeladen wird, sobald der Drucksensor 18 die Unterschreitung eines hohen Druckschwellwertes meldet. Dagegen wird die rechte Seite des Kolben-Zylinder-Aggregates 4 mit dem Reservoir 12 verbunden. Im Ergebnis wird am Kolben-Zylinder-Aggregat 4 eine Druckdifferenz wirksam, die die Zahnstange 3 in Fig. 1 nach rechts zu drängen sucht. Sobald die Soll-Istwert-Abweichung an den Druckminderventilen 7 und 8 verschwindet, nimmt das jeweilige Druckminderventil 7 bzw. 8 eine Schließlage ein, in der die jeweils angeschlossene Seite des Kolben-Zylinder-Aggregates 4 bzw. die jeweilige Anschlußleitung 5 oder 6 sowohl gegenüber dem Druckspeicher 11 als auch gegenüber dem Reservoir 12 abgesperrt sind. Bei einer eventuellen Verschiebung der Zahnstange 3 bzw. des Kolbens des Kolben-Zylinder-Aggregates 4 ändern sich zwangsläufig die Soll-Istwert-Abweichungen an den Druckminderventilen 7 und 8, solange die eingestellten Druck-Sollwerte unverändert bleiben; dementsprechend verstellen sich die Druckminderventile 7 und 8 zur Verminderung der jeweiligen Soll-Istwert-Abweichung.

Indem die Steuereinheit 15 die Druck-Sollwerte an den Druckminderventilen 7 und 8 vorgibt, wird die vom Kolben-Zylinder-Aggregat 4 zu erzeugende Servokraft hinsichtlich Betrages und Richtung vorgegeben, wobei dann die Druckminderventile 7 und 8 die zur Erreichung bzw. Aufrechterhaltung der jeweiligen Servokraft notwendigen Steuerhübe selbsttätig ausführen.

Um die Lenkbarkeit des Fahrzeuges auch bei Störungen der Steuereinheit 15 gewährleisten zu können, ist zweckmäßigerweise vorgesehen, daß die Druckminderventile 7 und 8 bei Abschaltung des elektrischen Steuerstromes für die Steuerorgane 7' und 8' der Druckminderventile 7 und 8 jeweils ihren Betriebszustand für minimalen Druck-Sollwert einnehmen, mit dem Ergebnis, daß dann beide Seiten des Kolben-Zylinder-Aggregates 4 ständig mit dem Hydraulikreservoir 12 verbunden bleiben. Wenn bei einer Störung der Steuereinheit 15 automatisch die Steuerorgane 7' und 8' stromlos geschaltet werden, kann also das Fahrzeug weiterhin - allerdings ohne Servounterstützung - gelenkt werden.

Das erfindungsgemäße System kann gegebenenfalls die Aufgabe einer Wegfahrsperre übernehmen. Falls die Steuereinheit 15 vor Fahrtantritt von einem nicht dargestellten Sicherungsgerät nicht ein Signal "berechtigter Fahrer" erhält, werden die Druck-Sollwerte an beiden Druckminderventilen 7 und 8 simultan auf einen sehr hohen Maximalwert gestellt. Dies hat zur Folge, daß die Druckminderventile 7 und 8 beide Seiten des Kolben-Zylinder-Aggregatès 4 ständig mit dem Druckspeicher 11 verbinden, wobei durch die Rückschlagventile 9 und 10 eine Verschiebung von Hydraulikmedium zwischen den beiden Seiten des Kolben-Zylinder-Aggregates 4 verhindert und damit das Aggregat 4 hydraulisch blockiert wird. Somit bleibt das Fahrzeug unlenkbar.

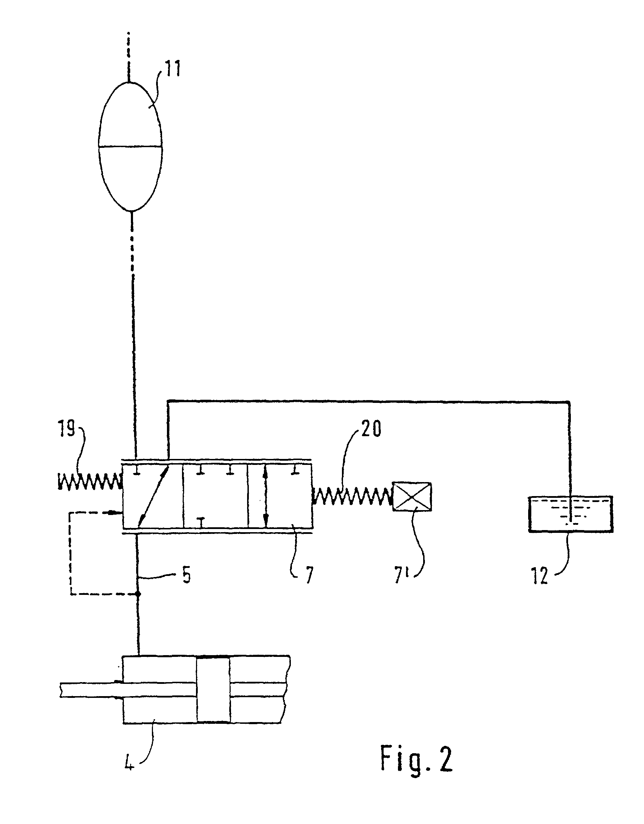

Die Fig. 2 zeigt eine funktionalere Darstellung der Druckminderventile 7 und 8, wobei lediglich das Druckminderventil 7 wiedergegeben wird. Funktional entspricht dieses Druckminderventil 7 einem 3/3-Ventil, welches zwischen einer Stellung, in der die Anschlußleitung 5 mit dem Hydraulikreservoir 12 verbunden ist, sowie einer Stellung, in der die Anschlußleitung 5 sowohl gegenüber dem Druckspeicher 11 als auch dem Reservoir 12 abgesperrt ist, und einer Stellung umsteuerbar ist, in der die Anschlußleitung 5 mit dem Druckspeicher 11 kommuniziert. Der nach Art eines Schiebers dargestellte Ventilkörper wird vom hydraulischen Druck in der Anschlußleitung 5 sowie der Kraft einer ersten Feder 19 in Richtung der die Anschlußleitung 5 mit dem Reservoir 12 verbindenden Ventilstellung gedrängt. Eine weitere Feder 20, deren Federspannung durch das Steuerorgan 7' steuerbar veränderlich ist, sucht den Ventilkörper in dessen die Anschlußleitung 5 mit dem Druckspeicher 11 verbindende Stellung zu drängen. Im Ergebnis wird damit durch den hydraulischen Druck in der Anschlußleitung 5 einerseits und die Federspannung der Feder 20 andererseits die jeweilige Ventilstellung bestimmt. Steigt der Druck in der Leitung 5 gegenüber der Spannung der Feder 20 hinreichend an, so wird der Ventilkörper in die in der Fig. 2 dargestellte Lage gestellt. Falls sich die hydraulischen Druckkräfte in der Leitung 5 sowie die Federspannung der Feder 19 einerseits und die Federspannung der Feder 20 andererseits ausgleichen, nimmt das Ventil die mittlere Sperrstellung ein. Falls dagegen die Federkräfte der Feder 20 überwiegen, geht das Ventil in die die Leitung 5 mit dem Druckspeicher 11 verbindende Stellung über.

Vorzugsweise ist das Steuerorgan 7' selbsthemmungsfrei ausgebildet, beispielsweise als Stellmagnet, so daß bei Abschaltung des elektrischen Steuerstromes für das Steuerorgan 7' eine Entspannung der Feder 20 eintritt, mit der Folge, daß die Feder 19 den Ventilkörper unabhängig vom hydraulischen Druck in der Anschlußleitung 5 in die in Fig. 2 dargestellte Lage stellt.

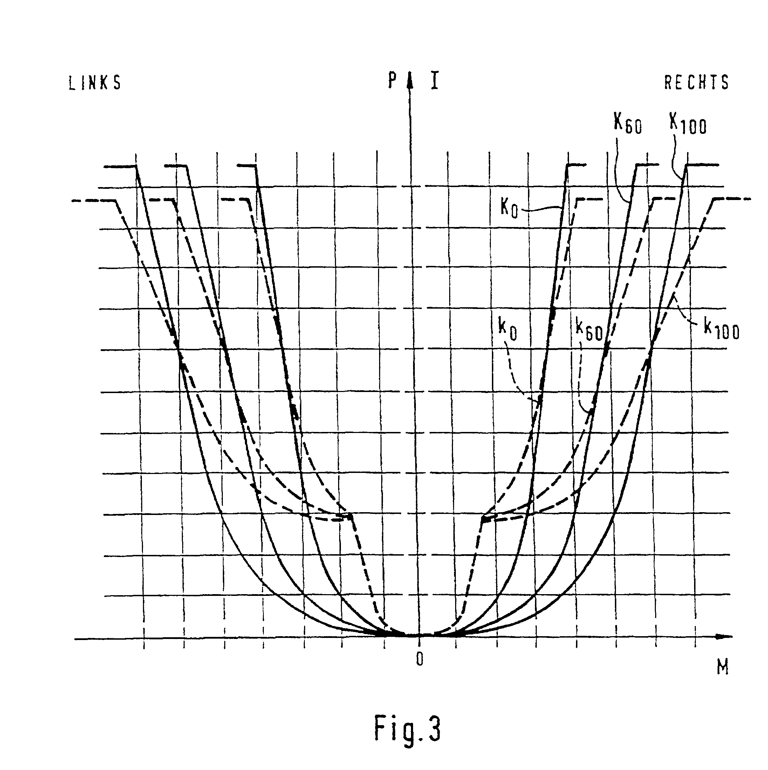

In Fig. 3 sind einerseits die Drücke P jeweils einer Seite des Kolben-Zylinder-Aggregates 4 in Abhängigkeit von der am Lenkhandrad 1 fühlbaren Handkraft M dargestellt. Dabei zeigt die Kurve K₀ die Verhältnisse bei stehendem Fahrzeug (Fahrgeschwindigkeit = 0 km/h), während die Kurven K₆₀ und K₁₀₀ die Verhältnisse für eine Fahrgeschwindigkeit von 60 km/h bzw. 100 km/h wiedergeben. Falls am Lenkhandrad 1 eine Handkraft M in der einen Richtung fühlbar ist, wird der Druck P in der einen Seite des Kolben-Zylinder-Aggregates 4 (beispielsweise auf der rechten Seite) entsprechend den Kurven K₀ bis K₁₀₀ verändert, während der Druck auf der anderen Seite des Kolben-Zylinder-Aggregates 4 verschwindend gering bleibt. Bei einer Handkraft in umgekehrter Richtung wird der Druck auf der anderen Seite des Kolben-Zylinder-Aggregates 4 (beispielsweise auf der linken Seite) den vorgenannten Kurven entsprechend gesteuert, während der Druck auf der einen Seite verschwindend gering bleibt.

Die Kurven k₀, k₆₀ und k₁₀₀ zeigen jeweils die elektrischen Steuerströme an den Steuerorganen 7' bzw. 8'. Bei sehr geringen Handkräften M wird kein Steuerstrom eingeschaltet. Sobald die Handkraft M in der einen oder anderen Richtung einen Schwellbetrag überschreitet, wird der elektrische Steuerstrom an jeweils einem Steuerorgan 7' bzw. 8' zur Erhöhung des Druck-Sollwertes am jeweiligen Druckminderventil 7 bzw. 8 mit zunehmenden Beträgen der Handkraft M stark erhöht. Bei weiter zunehmenden Beträgen der Handkraft M erfolgt dann eine zu den Kurven K₀, K₆₀ und K₁₀₀ analoge Steuerung der elektrischen Ströme.

Abweichend von der zeichnerisch dargestellten Ausführungsform, bei der der hydrostatische Servomotor 4 als Kolben-Zylinder-Aggregat ausgebildet ist, kann auch ein rotatorischer hydrostatischer Motor vorgesehen sein. Im Falle einer Zahnstangenlenkung kann ein derartiger Motor vorteilhaft auf bzw. an der Achse des Ritzels 2 angeordnet sein und einen Teil eines kompakten Zahnstangen-Ritzel-Getriebes bilden.

## Patentansprüche

1. Hydraulische Servolenkung mit
- einer Lenkhandhabe (1), sowie
- damit zur Lenkverstellung zwangsgekoppelten lenkbaren Fahrzeugrädern und
- einem mit den lenkbaren Fahrzeugrädern und/oder der Lenkhandhabe zwangsgekoppelten, doppeltwirkenden, hydrostatischen Servomotor (4),
- einer hydraulischen Druckerzeugungseinrichtung (11, 13),
- einem relativ drucklosen Hydraulikreservoir (12),
- einer Steuerventilanordnung (7,8), welche zwei parallele, jeweils einer Seite bzw. Anschlußleitung (5,6) des Servomotors (4) zugeordnete 3-Wege-Druckminderventile (7,8) aufweist und beide Seiten des Servomotors (4) mit dem Hydraulikreservoir (12) und jeweils eine Seite des Servomotors (4) mit der Druckerzeugungseinrichtung (11,13) zu verbinden gestattet,
- einem Sensor (16) zur Erfassung von zwischen der Lenkhandhabe (1) und den lenkbaren Fahrzeugrädern übertragenen Kräften bzw. Momenten sowie
- einer eingangsseitig mit dem Sensor (16) verbundenen elektronischen Steuervorrichtung (15), welche die Steuerventilanordnung (7,8) in Abhängigkeit von den zwischen Lenkhandhabe (1) und lenkbaren Fahrzeugrädern übertragenen Kräften bzw. Momenten derart steuert, daß der Servomotor (4) eine Servokraft zur Verminderung einer an der Lenkhandhabe (1) fühlbaren Handkraft erzeugt,
**dadurch gekennzeichnet,**
**daß**
- die Druckerzeugungseinrichtung (11,13) einen hydraulischen Druckspeicher (11) aufweist,
- die 3-Wege-Druckminderventile (7,8) mit steuerbarem Motordruck-Sollwert vorgesehen sind, und
- die Steuerung der Steuerventilanordnung (7,8) durch die Steuerung der Motordruck-Sollwerte der Druckminderventile (7,8) erfolgt.

2. Hydraulische Servolenkung nach Anspruch 1,
**dadurch gekennzeichnet,**
**daß** die Druckminderventile (7,8) als proportional arbeitende Ventile ausgebildet sind.

3. Servolenkung nach Anspruch 1 oder 2,
**dadurch gekennzeichnet,**
**daß** zwischen jedem Druckminderventil (7,8) und dem Druckspeicher (11) ein Rückschlagventil (9,10) angeordnet ist, welches einen Rückstrom zum Druckspeicher (11) verhindert.

4. Servolenkung nach einem der Ansprüche 1 bis 3,
**dadurch gekennzeichnet,**
**daß** die Steuervorrichtung (15) einen als Wegfahrsperre nutzbaren Betriebszustand einzuschalten gestattet, bei dem der Servomotor (4) hydraulisch blockiert ist.

5. Servolenkung nach einem der Ansprüche 1 bis 4,
**dadurch gekennzeichnet,**
**daß** die Steuervorrichtung (15) parameterabhängig veränderte Sollwerte für den Motordruck vorgibt.

6. Servolenkung nach einem der Ansprüche 1 bis 5,
**dadurch gekennzeichnet,**
**daß** jedes Druckminderventil (7,8) von einer mittels der Steuervorrichtung (15) veränderbaren Federkraft (20) gegen den Druck am jeweiligen Motoranschluß (5,6) in eine den Druckspeicher (11) mit dem Motoranschluß (5,6) verbindende Stellung gedrängt wird.

7. Servolenkung nach einem der Ansprüche 1 bis 6,
**dadurch gekennzeichnet,**
**daß** dem hydraulischen Druckspeicher (11) eine - vorzugsweise von der Steuervorrichtung (15) betätigte - elektrische Ladepumpe (13) zugeordnet ist.

## Claims

1. Hydraulic power-assisted steering with
- a steering handle (1) and
- steerable vehicle wheels forcibly coupled therewith in order to adjust the steering and
- a double-action, hydrostatic servo motor (4) forcibly coupled with the steerable vehicle wheels and/or the steering handle,
- a hydraulic pressure-generating system (11, 13),
- a relatively pressureless hydraulic reservoir (12),
- a control valve arrangement (7, 8) having two parallel 3-way pressure-reducing valves (7, 8) assigned respectively to a side or connecting line (5, 6) of the servo motor (4) enabling both sides of the servo motor (4) to be connected to the hydraulic reservoir (12) and a side of the servo motor (4) respectively to the pressure-generating system (11, 13),
- a sensor (16) for detecting forces and torques transmitted between the steering handle (1) and the steerable vehicle wheels and
- an electronic control device (15) connected on the input side to the sensor (16) to control the control valve arrangement (7, 8) depending on forces and torques transmitted between steering handle (1) and steerable vehicle wheels such that the servo motor (4) produces a servo-force to reduce a perceptible manual force on the steering handle (1),
**characterised in that**
- the pressure-generating system (11, 13) has a hydraulic accumulator (11),
- the 3-way pressure-reducing valves (7, 8) are provided with a controllable motor pressure-desired value and
- the control valve arrangement (7, 8) is controlled by adjusting the motor pressure-desired values of the pressure-reducing valves (7, 8).

2. Hydraulic power-assisted steering as claimed in claim 1,
**characterised in that**
the pressure-reducing valves (7, 8) are designed as proportionally operating valves.

3. Power-assisted steering as claimed in claim 1 or 2,
**characterised in that**
a non-return valve (9, 10) is arranged between each pressure-reducing valve (7, 8) and the accumulator (11), which prevents a return flow to the accumulator (11).

4. Power-assisted steering as claimed in one of claims 1 to 3,
**characterised in that** the control device (15) allows switching to an operating state in which the servo motor (4) is hydraulically blocked, which can be used as a lock against driving off.

5. Power-assisted steering as claimed in one of claims 1 to 4,
**characterised in that**
the control device (15) pre-sets parameter-dependent adjusted desired values for the motor pressure.

6. Power-assisted steering as claimed in one of claims 1 to 5,
**characterised in that**
each pressure-reducing valve (7, 8) is biassed by a spring force (20) adjustable by the control device (15) against the pressure at the respective motor connection (5, 6) into a position in which the accumulator (11) is connected to the motor connection (5, 6).

7. Power-assisted steering as claimed in one of claims 1 to 6,
**characterised in that**
an electric booster pump (13) - preferably operated by the control device (15) - co-operates with the hydraulic accumulator (11).

## Revendications

1. Direction assistée hydraulique comportant
- un volant de direction (1), et
- des roues orientables d'un véhicule, qui sont couplées selon un couplage forcé au volant de direction, pour le mouvement de braquage, et
- un servomoteur hydrostatique à double effet (4) couplé selon un couplage forcé aux roues orientables du véhicule et/ou au volant de direction,
- un dispositif hydraulique de production de pression (11, 13),
- un réservoir hydraulique (12) relativement sans pression,
- un dispositif à soupapes de commande (7, 8) qui comporte deux soupapes de réduction de pression à 3 voies (7, 8), qui sont associées chacune à un côté ou à une canalisation de raccordement (5, 6) du servomoteur (4), et permet de relier les deux côtés du servomoteur (4) au réservoir hydraulique (12) et respectivement un côté du servomoteur (4) au dispositif de production de pression (11, 13),
- un capteur (16) pour déterminer des forces ou des couples, qui sont transmis entre le volant de direction (1) et les roues orientables du véhicule, et
- un dispositif de commande électronique (15), qui est relié côté entrée au capteur (16) et qui commande le dispositif à soupapes de commande (7, 8) en fonction des forces ou des couples transmis entre le volant de direction (1) et les roues orientables du véhicule de telle sorte que le servomoteur (4) produit une force d'asservissement servant à réduire une force manuelle pouvant être détectée au niveau du volant de direction (1),
**caractérisé en ce que**
- le dispositif de production de pression (11, 13) comporte un accumulateur de pression hydraulique (11),
- les soupapes de réduction de pression à 3 voies (7, 8) sont prévues avec une valeur de consigne commandable de la pression du moteur, et
- la commande du dispositif à soupapes de commande (7, 8) est réalisée au moyen de la commandé des valeurs de consigne de la pression du moteur des soupapes de réduction de pression (7, 8).

2. Direction assistée hydraulique selon la revendication 1, **caractérisée en ce que** les soupapes de réduction de pression (7, 8) sont agencées sous la forme de soupapes travaillant d'une manière proportionnelle.

3. Direction assistée selon la revendication 1 ou 2, **caractérisée en ce qu'**entre chaque soupape de réduction de pression (7, 8) et l'accumulateur de pression (11) est disposée une soupape antiretour (9, 10), qui empêche un flux de retour en direction de l'accumulateur de pression (11).

4. Direction assistée selon l'une des revendications 1 à 3, **caractérisée en ce que** le dispositif de commande (15) permet d'activer un état de fonctionnement utilisable en tant que système de blocage contre un déplacement et dans lequel le servomoteur (4) est bloqué hydrauliquement.

5. Direction assistée selon l'une des revendications 1 à 4, **caractérisée en ce que** le dispositif de commande (15) prédétermine des valeurs de consigne, modifiées en fonction de paramètres, pour la pression du moteur.

6. Direction assistée selon l'une des revendications 1 à 5, **caractérisée en ce que** chaque soupape de réduction de pression (7, 8) est repoussée par une force de ressort (20), modifiable au moyen du dispositif de commande (15), à l'encontre de la pression présente dans le raccord respectif (5, 6) du moteur, dans une position qui relie l'accumulateur de pression (11) au raccord (5, 6) du moteur.

7. Direction assistée selon l'une des revendications 1 à 6, **caractérisée en ce qu'**une pompe de charge électrique (16) - actionnée de préférence par le dispositif de commande (15) - est associée à l'accumulateur de pression hydraulique (11).
